Europäisches Patentamt

European Patent Office

Office européen des brevets

(19)

(11) Veröffentlichungsnummer: **0 127 138**
**B1**

(12) **EUROPÄISCHE PATENTSCHRIFT**

(45) Veröffentlichungstag der Patentschrift: **16.05.90**

(21) Anmeldenummer: **84105939.7**

(22) Anmeldetag: **24.05.84**

(51) Int. Cl.⁵: **H 04 Q 11/04**, H 04 M 11/06, H 04 L 12/54

(54) Mit einem Informationsverarbeitungssystem verbundenes Telekommunikationssystem.

(30) Priorität: **26.05.83 DE 3319106**

(43) Veröffentlichungstag der Anmeldung:
**05.12.84 Patentblatt 84/49**

(45) Bekanntmachung des Hinweises auf die
Patenterteilung:
**16.05.90 Patentblatt 90/20**

(84) Benannte Vertragsstaaten:
**AT BE CH DE FR GB IT LI NL SE**

(56) Entgegenhaltungen:
EP-A-0 075 998
EP-A-0 126 413
EP-A-0 126 482

ELECTRICAL COMMUNICATION, Band 56, Nr. 1,
1981, Seiten 44-56, New York, US; G. TOLUSSO
et al.: "Aplication of distributed control to
handling non-voice services"

(73) Patentinhaber: **Siemens Aktiengesellschaft
Wittelsbacherplatz 2
D-8000 München 2 (DE)**

(72) Erfinder: **Gerke, Peter, Dipl.-Ing.
Schiltbergstrasse 1
D-8032 Gräfelfing (DE)**

(56) Entgegenhaltungen:
**IEEE GLOBAL TELECOMMUNICATIONS
CONFERENCE, Miami, 29. November - 2.
Dezember 1982, Band 2, Seiten C241-C246,
IEEE; H. EVERS: "Local area communications on
the basis of an EPABX with integrated
voice/data features"**

## Beschreibung

In der modernen Bürotechnik gewinnt der Verbund von Kommunikationssystemen und Datenverarbeitungssystemen zunehmend an Bedeutung (telcom report 5(1982)5, 282); in der künftigen Bürotechnik sind Anforderungen an die Telekommunikationstechnik zu erwarten, die über deren heutiges Angebot hinausgehen.

Die Telekommunikationstechnik geht aus von einer Telekommunikation von Teilnehmern in jeweils einer Kommunikationsform, beispielsweise in Form einer Sprach-, Text- oder Bildkommunikation. Hierfür stehen öffentliche Telekommunikationsdienste zur Verfügung, die jeweils Verkehrsmöglichkeiten von jedem zu jedem Teilnehmer sicherstellen, wobei man die die jeweilige Kompatibilität gewährleistenden Standards im allgemeinen auch in den Bereich eines privaten sog. In-House-Kommunikationssystems übernimmt.

Neuere Entwicklungen der Telekommunikationstechnik zielen dabei über ein digitalisiertes Fernsprechnetz auf ein diensteintegrierendes Digitalnetz (ISDN) ab, in welchem in einheitlichen Telekommunikationskanälen beispielsweise mit einer Bitrate von 64 kbits/s (je Übertragungsrichtung) außer Sprache auch Texte, Bilder und Daten übermittelt (übertragen und vermittelt) werden, wobei den Teilnehmern die Nutzung der verschiedenen Telekommunikationsdienste über einen einheitlichen Teilnehmeranschluß ermöglicht wird, an den Endgeräte für Telefonie, Textkommunikation, Bildkommunikation und Datenkommunikation in vielfältigen Konfigurationen anschließbar sind. Der ISDN-Teilnehmeranschluß muß dafür geeignete Grundeigenschaften, beispielsweise hinsichtlich der Bitrate, der Signalisierungsmöglichkeiten und der Reichweite, aufweisen; in der internationalen Diskussion und bei Standardisierungsarbeiten bei CEPT und CCITT hat sich in diesem Zusammenhang der sogenannte Basisanschluß (Basic Access) mit der Kanalstruktur B+B+D (je Übertragungsrichtung) herauskristallisiert, worin B ein 64-kbit/s-Kanal ist, der digital codierte Informationen unterschiedlicher Art wie Sprache, Text, Fax, Daten, simultan, von Verbindung zu Verbindung oder innerhalb einer Verbingung alternierend oder fest zugeordnet übertragen kann, und worin D ein (nicht weitervermittelter) 16-kbit/s-Kanal ist, in dem im Nachrichtenmultiplex mit Vorrang Signalisierungszeichen und darüber hinaus Telemetriesignale und langsame, paketorientierte Daten übertragen werden können.

Ein Schritt zu neuen Anforderungen an die Telekommunikationstechnik geht dahin, daß man sich innerhalb ein und desselben Kommunkationsvorgangs auch verschiedener Kommunikationsformen will bedienen können, z.B. durch eine wahlweise Unterstützung von Sprachkommunikation durch Bildkommunikation; es ist zu erwarten, daß eine solche kombinierte oder auch Misch-Kommunikation mit ihren Steuerkommandos im, Rahmen der internationalen Festlegungen zu ISDN ebenfalls standardisiert wird.

Merkmal aller Telekommunikationsdienste ist die grundsätzlich gegebene Zugänglichkeit für alle potentiellen Benutzer, wobei der Benutzer bei Nutzung verschiedener Kommunikationsdienste und -formen eine entsprechende Mehrzahl verschiedener Kommunikationsgeräte oder eine entsprechendes multifunktionales Kommunikationsgerät besitzen und damit Zugang zu entsprechenden kommunikationsspezifischen Netzen oder auch einen multifunktionalen Zugang zu einen multifunktionalen, d.h. diensteintegrierenden Netz haben muß.

Der neben der Telekommunikationstechnik zweite große Bereich der Unterstützung von Bürotätigkeit ist die Informationsverarbeitung nach Maßgabe von mehr oder weniger spezifischen, auf die jeweilige Büroaufgabe zugeschnittenen Anwenderprogrammen; Komponenten einer solchen unterstützenden Informationsverarbeitung können beispielsweise durch Text- und/oder Grafikbearbeitung, sogenannte Electronic Mail und/oder Archivfunktionen gegeben sein. Im Rahmen dieser Informationsverarbeitung findet ggf. auch eine Informationsübermittlung etwa zwischen zentralen Rechnern untereinander oder zwischen diesen und Arbeitsplatzrechnern oder intelligenten Terminals statt, wozu verschiedene herstellerspezifische Kommunikationskonzepte entstanden sind; diese Informationsübermittlung im Rahmen der unterstützenden Informationsverarbeitung ist dabei bei bisher konzipierten Büroarbeitsplätzen unabhängig von der oben besprochenen Telekommunikation, d.h., der Benutzer am Büroarbeitsplatz hat eine Mehrzahl eigenständiger Teilnehmeranschlüsse, beispielesweise einen Anschluß an ein der Sprachkommunikation dienendes Telefonienetz und einen Anschluß an ein der Informationsübermittlung im Rahmen der Informationsverarbeitung dienendes sog. Lokales Netz (Local Area Network).

Die Einrichtung mehrerer eigenständiger Netze ist indessen entsprechend aufwendig, wobei zugleich auch die Bürotechnik verhältnismäßig aufwendig und kompliziert bleibt: Zur teilnehmerstationsindividuellen Informationsverarbeitung muß die Arbeitsplatz-Teilnehmerstation neben ein oder mehreren Endgaräten zur Informationsein- und/oder -ausgabe entsprechende Zusatzfunktionseinheiten für die Informationsverarbeitung wie z.B. Umsetzeinrichtungen, Speicher und Rechner aufweisen; will der Benutzer beispielsweise Datenverarbeitungsanlagen verschiedener Hersteller nutzen, so ist dies zwar dadurch möglich, daß der Benutzer sich durch sog. Emulation auch von einem herstellerfremden Terminal Zugang zu solchen Datenverarbeitungsanlagen verschafft, wozu aber zum einen entsprechende Emulatoren im Benutzerterminal geladen sein müssen und wobei zum anderen jeder Emulator seinen eigenen Zugang zu der jeweils zugehörigen Datenverarbeitungsanlage erfordert.

Wünschenswert ist daher eine Möglichkeit, Telekommunikation und bürotätigkeitsunterstützende Informationsverarbeitung möglichst konzentriert in einem einzigen System abwickeln zu können, und die Erfindung zeigt hierzu einen Weg.

Die Erfindung betrifft ein mit einem Informationsverarbeitungssystem verbundenes Telekommunikationssystem; dieses System ist erfindungsgemäß dadurch gekennzeichnet, daß es mittel aufweist, die bewirken, daß in einem diensteintegrierenden Digitalnetz mit über durch Zweikanal-Basisanschlüsse gegebene ISDN-Teilnehmeranschlüsse an eine Digitalvermittlungsstelle angeschlossenen, ein Mehrzahl von dientspezifischen Endeinrichtungen umfassenden oder auch mehrfunktionalen Teilnehmerstationen zur fallweisen Abwicklung von Telekommunikationsverbindungen einer die erforderlichen Telekommunikationsfunktionseinheiten umfassenden Teilnehmerstation nur der eine der beiden Nutzkänale des ISDN-Teilnehmeranschlusses in einer Koppeleinrichtung der Digitalvermittlungsstelle jeweils für die Dauer der betreffenden Verbindung zu dem entsprechenden jeweils einen Nutzkanal des an der betreffenden Verbindung beteiligten anderen ISND-Teilnehmeranschlusses durchgeschaltet wird und zur teilnehmerstationsindividuellen Informationsverarbeitung die ein oder mehrere Endgeräte zur Informationsein- und/oder -ausgabe aufweisende, aber nicht mit allen Zusatzfunktionseinheiten für die Informationsverarbeitung versehene Teilnehmerstation in dem anderen der beiden Nutzkanäle des ISDN-Teilnehmeranschlusses über ein Koppeleinrichtung der Digitalvermittlungsstelle permanent oder fallweise auf Anforderung mit die Informationsverarbeitung ermöglichenden zentralen Zusatzfunktionseinheiten zusammengeschaltet ist, wobei diese Zusatzfunktionseinheiten mit weiteren eine Informationsverarbeitung bewirkenden Funktionseinheiten durch ein Lokales Netz ständig zusammengeschaltet sind.

Die Erfindung bringt den Vorteil mit sich, sowohl die eigeniche Telekommunikation als auch ein tätigkeitsunterstützende Informationsverarbeitung über ein gemeinsames kanalorientiertes Netz, nämlich das diensteintegrierende Digitalnetz (ISDN) abwickeln zu können, wobei eine Teilnehmerstation weder die Zusatzfunktionseinheiten für die jeweilige Informationsverarbeitung bereits selbst aufweisen noch jeweils einen eigenen Zugang zu anderen Datenverarbeitungsanlagen haben muß, vielmehr jeweils über die Koppeleinrichtung einer Digitalvermittlungsstelle mit die Informationsverarbeitung ermöglichenden zentralen Zusatzfunktionseinheiten, beispielsweise zunächst mit Schnittstellenanpassungseinrichtungen, verbunden werden kann. Dadurch, daß diese zentralen Zusatzfunktionseinheiten ihrerseits durch ein Lokales Netz ständig zusammengeschaltet sind mit weiteren ein Informationsverarbeitung bewirkenden Funktionseinheiten wie z.B. Dienstleistungsrechnern, Datenbanken oder zu verschiedenen Datenverarbeitungsanlagen führenden zentralen Emulatoren, bestehen einerseits für die einzelnen, mehr oder weniger verstreut liegenden Teilnehmerstationen Zugangsmöglichkeiten zu allen angebotenen tätigkeitsunterstützenden Funktionen, während andererseits der Aufwend für das die Funktionseinheiten zusammenfassende Lokale Netz insofern klein gehalten werden kann, als die Funktionseinheiten an zentraler Stelle zusammengefaßt werden können. Von Vorteil ist es auch, Informationen im Ablauf von Bürovorgängen möglichst lange in ein und derselben (nämlich elektronischen) Darstellungsform zu belassen und damit mehrfache Umsetzungen auf unter schiedliche Informationsträger (z.B. Papier — elektronische Ebene — Papier — elektronische Ebene — Papier) vermeiden zu können.

Es sei an dieser Stelle bemerkt, daß (in der EP—A—126482, veröffentlicht 28.11.84, Prioritätsdatum 24.5.83) bereits vorgeschlagen wurde, ein Telekommunikationssystem sowhol für sog. Stream-Verkehr, insbesondere zwischen Geräten zur Sprach-, Text- und/oder Bildkommunikation, als auch für sog. Burst-Verkehr, insbesondere zwischen Geräten zur Daten- und/oder Textverarbeitung, dadurch zu bilden, daß in einem diensteintegrierenden Digitalnetz mit an eine Digitalvermittlungsstelle angeschlossen, durch Zweikanal-Basisanschlüsse gegebenen ISDN-Teilnehmerschlüssen jeweils der eine der beiden Nutzkanäle eines ISDN-Teilnehmeranschlusses zur fallweisen Abwicklung von Stream-Verkehrsverbindungen in einer Koppeleinrichtung der Digitalvermittlungsstelle jeweils für die Dauer der betreffenden Verbindung zu dem entsprechenden jeweils einen Nutzkanal des an der betreffenden Verbindung beteiligten anderen ISDN-Teilnehmeranschlusses durchgeschaltet wird und der andere der beiden Nutzkanäle des ISDN-Teilnehmeranschlusses über ein Koppeleinrichtung der Digitalvermittlungsstelle mit den entsprechenden jeweils anderen Nutzkanälen weiterer ISDN-Teilnehmeranschlüsse dauernd zu einem dem Burst-Verkehr dienenden Netzwerk zusammengeschaltet ist.

Ein solches Telekommunikationssystem geht davon aus, daß die betreffenden Teilnehmerstationen neben Endgeräten zur Daten- und/oder Textein- bzw. -ausgabe auch entsprechende stationsindividuelle oder (als sog. Cluster) auch mehrere Teilnehmeranstationen zusammenfassende Zusatzfunktionseinheiten für die Daten- bzw. Textverarbeitung und auch zur Schnittstellenanpassung aufweisen; die über die Koppeleinrichtung dauernd zusammengeschalteten ISDN-Nutzkanäle sind dabei Bestandteil des Lokalen Netzes für einen nach ISDN-Normen (mit 64 kbit/s) vor sich gehenden Burst-Verkehr. Die vorliegende Erfindung begnügt sich mit Teilnehmerstationen, die nicht mit allen Zusatzfunktionseinheiten für eine Informationsverarbeitung versehen sind.

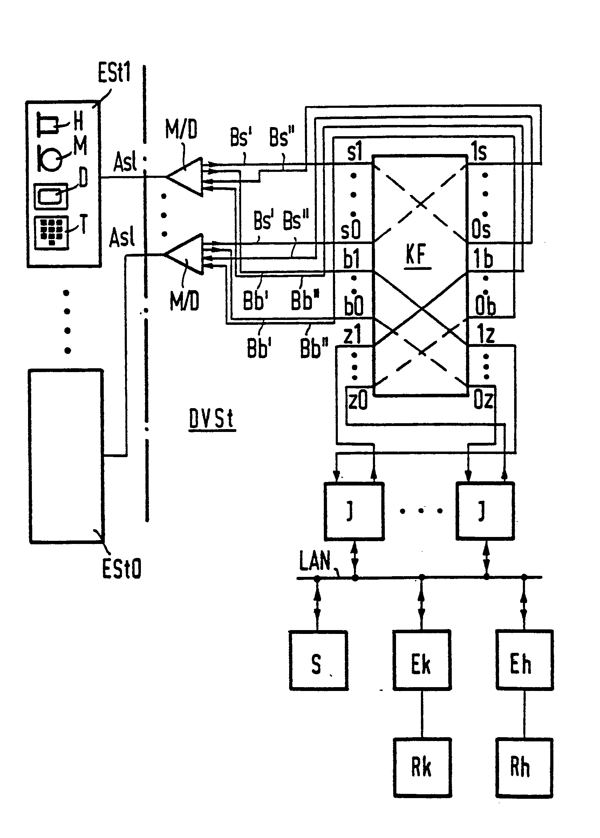

Anhand der Zeichnung sei die Erfindung noch näher erläutert. In der Zeichnung ist schematisch in einem zum Verständis der Erfindung erforderlich Umfange ein Telekommunikationssystem gemäß der Erfindung dargestellt. Dieses Telekommunikationssystem weist Teilnehmerstationen (Endstellen) ESt auf, die zur Nutzung einer Mehrzahl von Diensten bzw. Dienstleistungen mit einer entsprechenden Mehrzahl verschiedener Endgeräte oder einem entsprechenden multifunktionalen Endgerät wie beispielsweise dem bekannten Bildschirmtelefon (Bitel) ausgestattet sein mögen; in der Zeichnung ist dazu angedeutet, daß die sog. Benutzeroberfläche einer solchen Teilnehmerstation beispielsweise einen Telfonhöhrer H und ein Mikrofon M zur Sprachkommunikation sowie eine Tastatur T zum Verbindungsaufbau und/oder zur Daten- bzw. Texteingabe und einen Bildschirm oder Display D zur Daten- bzw. Textausgabe aufweisen kann. Die Teilnehmerstationen ESt sind an eine zugehörige Digitalvermittlungsstelle über ISDN-Teilnehmeranschlüsse Asl angeschlossen, die eine wenigstens zwei Nutzkanäle (je Übertrangungsrichtung) aufweisende Kanalstruktur haben mögen — wie dies bei dem eingangs erwähnten Basisanschluß mit der Kanalstruktur B+B+D der Fall ist —, wobei die einzelnen Kanäle übertragnungsrichtungsgetrennt jeweils zeitlich gebündelt sind. In der Zeichnung ist angedeutet, daß am Eingang/Ausgang der Digitalvermittlungsstelle DVSt, etwa in einer dort vorgesehen, in der Zeichnung indessen nicht im einzelnen dargestellten Netzabschlußeinheit, die jeweils beiden B-Kanäle Bs', Bb'; Bs'', Bb'' jeder Übertragungsrichtung über einen Multiplexer/Demultiplexer und ggf. auch Serien/Parallel- bzw. Parallel/Serien-Umsetzer M/D an eine Koppeleinrichtung KF der Digitalvermittlungsstelle DVSt herangeführt sind; dabie können die Multiplexer/Demultiplexer MD über die jeweils beiden B-Kanäle hinaus auch die weiteren im Rahmen der gegebenen Kanalstruktur vorgesehenen Kanäle zusammenfassen bzw. auffächern, ohne daß dies in der Zeichnung noch näher dargestellt werden müßte. Die Zeichnung zeigt übrigens ein räumliches Funktionsbild, das insofern als Ersatzbild zu lesen ist, als die einzelnen Nutzkanäle innerhalb der Digitalvermittlungsstelle DVSt als räumlich voneinander getrennte Kanäle dargestellt sind, während in der Realisierung Nutzkanäle gleicher Übertragungsrichtung auch im Zeitmultiplex auf Zeitmultiplexleitungen zusammengefaßt an die Koppeleinrichtung KF herangeführt sein können.

In der Koppeleinrichtung KF wird der jeweils eine Nutzkanal Bs'/Bs'' des ISDN-Teilnehmeranschlusses Asl einer Teilnehmerstation ESt zur fallweisen Abwicklung einer Telekommunikationsverbindung dieser Teilnehmerstation jeweils für die Dauer der betreffenden Verbindung zu dem entsprechenden jeweils einen Nutzkanal Bs''/Bs' des ISDN-Teilnehmeranschlusses Asl der an der betreffenden Verbindung beteiligten anderen Teilnehmerstation durchgeschaltet. Dies kann in in der Zeitmultiplexvermittlungstechnik bekannter Weise vor sich gehen, so daß sich nähere Erläuterungen dazu an dieser. Stelle erübrigen. In der Zeichnung ist dazu beispielsweise für den Fall einer Telekommunikationsverbindung zwischen den beiden Teilnehmerstationen ESt1 und Est0 angedeutet, daß der von dem einen Nutzkanal Bs' der Teilnehmerstation ESt1 erreichte Eingang s1 der Koppeleinrichtung KF mit dem Koppeleinrichtungsausgang 0s verbunden sein kann, von dem der eine Nutzkanal Bs'' zu der Teilnehmerstation ESt0 weiterführt, und daß zugleich der von dem einen Nutzkanal Bs' der Teilnehmerstation ESt0 erreichte Eingang s0 der Koppelfeldeinrichtung KF mit dem Koppelfeldausgang 1s verbunden sein kann, von dem der ein Nutzkanal Bs'' zur Teilnehmerstation ESt1 weiterführt.

Neben einer solchen Telekommunikation zwischen zwei an die Digitalvermittlungsstelle DVSt angeschlossenen Teilnehmerstationen Est oder auch zwischen einer solchen Teilnehmerstation und einer Teilnehmerstelle, die an eine mit der Digitalvermittlungsstelle DVSt verbundene andere Vermittlungsstelle angeschlossen ist, ermöglicht das in der Zeichnung skizzierte Telekommunikationssystem auch eine teilnehmerstationsindividuelle Informationsverarbeitung, ohne daß die Teilnehmerstationen selbst die dazu erforderlichen Zusatzfunktionseinheiten aufweisen müssen: Zu einer solchen teilnehmerstationsindividuellen Informationsverarbeitung wird in der Koppeleinrichtung KF der andere Nutzkanal Bb'/Bb'' des der betreffenden Teilnehmerstation ESt zugehörigen ISDN-Teilnehmeranschlusses Asl permanent oder fallweise (auf Anforderung) zunächst mit die Informationsverarbeitung ermöglichenden zentralen Zusatzfunktionseinheiten J zusammengeschaltet. In der Zeichnung ist dazu angedeutet, daß der dem Nutzkanal Bb'/Bb'' der Teilnehmerstation ESt0 zugeordnete Eingang/Ausgang b0/0b der Koppeleinrichtung KF auf Anforderung mit dem einer Zusatzfunktionseinheit J zugeordneten Ausgang/Eingang 0z/z0 der Koppeleinrichtung KF verbunden sein kann; des weiteren ist angedeutet, daß der dem Nutzkanal Bb'/Bb'' der Teilnehmerstation ESt1 zugeordnete Eingang/Ausgang b1/1b der Koppeleinrichtung KF ständig mit dem einer anderen Zusatzfunktionseinheit J zugeordneten Ausgang/Eingang 1z/z1 der Koppeleinrichtung KF verbunden sein kann.

Bei den Zusatzfunktionseinheiten J kann es sich z.B. um Textbearbeitungseinheiten oder um andere benutzernahe Funktionen erfüllende Zustazfunktionseinheiten handeln, was hier jedoch nich weiter verfolgt zu werden braucht, da dies zum Verständis der Erfindung nich erforderlich ist. Zugleich wirken solche Zusatzfunktionseinheiten J auch als Schnittstellenanpassungseinheiten, die in den ISDN-Nutzkanälen Bb auftretende 64-kbits/s-Bursts etwa in 10-Mbit/s-Bursts (und umgekehrt) umsetzen, wie sie für ein Lokales Netz charaketeristisch sind, wobei die Funktionseinheiten J zugleich den Zugriff zu einem solchen Lokalen Netz ermöglichen.

Durch das Lokale Netz LAN sind die Zusatzfunktionseinheiten J ständig mit weiteren eine Funktionsverarbeitung bewirkenden Funktionseinheiten zusammengeschaltet beispielsweise mit einem (z.B. ein Archivierung ermöglichenden) Dienstleistungsrechner (sog. "Server") S oder mit Emulationseinrichtungen Eh, Ek, die zu unterschiedlichen Datenbanken oder Datenverarbeitungsanlagen Rh, Rk führen mögen. Auch diese Funktionseinheiten brauchen hier nicht näher betrachtet zu werden, da auch dies zum Verständnis der Erfindung nicht erforderlich ist. Die Verkehrsabwicklung über das Lokale Netz LAN, das, wie eingangs schon erwähnt wurde, bei Zusammenfassung zentraler Funktionseinheiten J, E, S, R entsprechend klein gehalten sein kann, kann in einer für Lokale Netz bekannten Weise vor sich gehen, so daß sich nähere Erläuterungen dazu an dieser Stelle erübrigen.

Wie die vorstehenden Erläuterungen deutlich machen, sind durch das Telekommunikationssystem gemäß der Erfindung somit einerseits alle Kommunikationsanforderungen und andererseits die Anforderungen der Informationsverarbeitung hinsichtlich der Zubringerfunktionen erfüllbar, so daß sowohl getrennte Netze für die Telekommunikation und für die Informationsverarbeitung als auch teilnehmerstationsindividuelle Funktionseinheiten zur Informationsverarbeitung vermieden werden können und dennoch eine wirksame Unterstützung von Bürotätigkeit erzielt werden kann.

## Patentanspruch

Mit einem Informationsverarbeitungssystem verbundenes Telekommunikationssystem, dadurch gekennzeichnet, daß es mittel aufweist, die bewirken, daß in einem diensteintegrierenden Digitalnetz (ISDN) mit über durch Zweikanal-Basisanschlüsse gegebene ISDN-Teilnehmeranschlüsse (Asl) an eine Digitalvermittlungsstelle (DVSt) angeschlossenen, eine Mehrzahl von dienstspezifischen Endeinrichtungen umfassenden oder auch mehrfunktionalen Teilnehmerstationen zur fallweisen Abwicklung von Telekommunikationsverbindungen einer die erforderlichen Telekommunikations-Funktionseinheiten (M, H, T, D) umfassenden Teilnehmerstation (ESt) nur der eine (Bs') der beiden Nutzkänale (Bs, Bb) des ISDN-Teilnehmeranschlusses (Asl) in einer Koppeleinrichtung (KF) der Digitalvermittlungsstelle (DVSt) jeweils für die Dauer der betreffenden Verbindung zu dem entsprechenden jeweils einen Nutzkanal (Bs'') des an der betreffenden Verbindung beteiligten anderen ISND-Teilnehmeranschlusses (Asl) durchgeschaltet wird und zur teilnehmerstationsindividuellen Informationsverarbeitung die ein oder mehrere Endgeräte (T, D) zur Informationsein- und/oder -ausgabe aufweisende, nicht mit Zustazfunktionseinheiten für die Informationsverarbeitung versehene Teilnehmerstation (ESt) in dem anderen (Bb') der beiden Nutzkanäle (Bs, Bb) des ISDN-Teilnehmeranschlusses (Asl) über ein Koppeleinrichtung (KF) der Digitalvermittlungsstelle (DVSt) permanent oder fallweise auf Anforderung mit die Informationsverarbeitung ermöglichenden zentralen Zusatzfunktionseinheiten (J) zusammengeschaltet ist, wobei diese Zusatzfunktionseinheiten (J) mit weiteren eine Informationsverarbeitung bewirkenden Funktionseinheiten (E, R, S) durch ein Lokales Netz (LAN) ständig zusammengeschaltet sind.

## Revendication

Système de télécommunications relié à un système de traitement des informations, caractérisé par le fait qu'il comporte des moyens qui provoquent que dans un réseau numérique à intégration de services (ISDN) comportant une pluralité de postes d'abonnées reliés à un central numérique (DVSt) par l'intermédiaire de raccordements d'abonnés (Asl) du type ISDN, formés par des branchements de base à deux canaux, et comprenant des ensembles terminaux spécifiques aux services ou encore plurifonctionnels pour le déroulement, suivant le cas, de liaisons de télécommunications d'un poste d'abonné (Est) qui comprend les unités fonctionnelles de télécommunications (M, H, T, D) qui sont nécessaires, seul un (Bs') des deux canaux utiles (Bs, Bb) du raccordement d'abonné (Asl) du type ISDN est relié, dans un dispositif de couplage (KF) du central numérique (DVSt) et pour la durée de la liaison envisagée, au canal utile correspondant (Bs''), à l'autre raccordement d'abonné (Asl), du type IDSN, qui participe à la liaison envisagée, et que pour le traitement des informations, individuelles aux postes d'abonnées, le poste d'abonné (ESt) qui comporte un ou plusieurs appareils terminaux (T, D) pour l'entrée et/ou la sortie d'informations et dépourvu d'unités fonctionnelles supplémentaires pour le traitement d'informations, et relié dans l'autre (Bb') des deux canaux utiles (Bs, Bb) du raccordement d'abonné (Asl) du type (ISDN) et par l'intermédiaire d'un dispositif de couplage (KF) du central numérique (DVSt), de façon permanente ou sur demande, aux unités centrales fonctionnelles supplémentaires (J) qui permettent le traitement des informations, ces dernières unités (J) étant reliées en permanence par un réseau local (LAN) avec d'autres unités fonctionnelles (E, R, S) qui provoquent un traitement d'informations.

## Claim

Telecommunications system linked to an information processing system, characterized in that it has means which have the effect that in an integrated services digital network (ISDN) having subscriber stations, which comprise a plurality of service-specific terminal devices or else are multifunctional, and which are connected to a digital exchange (DVSt) via two-channel basic accesses consituting ISDN subscriber lines (Asl), for the case-by-case handling of telecommunication connections of a subscriber station (Est) comprising the required telecommunications function units (M, H, T, D), only one (Bs') of the two user information channels (Bs, Bb) of the ISDN subscriber line (Asl) is switched through in a switching device (KF) of the digital exchange (DVSt) in each case for the duration of the respective connection to the corresponding respective one user information channel (Bs'') of the other ISDN subscriber line (Asl) participating in the connection concerned, and, for information processing specific to the subscriber station, the subscriber station (Est), which has one or more terminals (T, D) for information input and/or output and which is not provided with additional function units for information processing, in the other (Bb') of the two user information channels (Bs, Bb) of the ISDN subscriber line (Asl) is interconnected via a switching device (KF) of the digital exchange (DVSt) permanently, or from case to case as requested, with central additional function units (J) permitting the information processing, these additional function units (J) being interconnected permanently via a local area network (LAN) with further function units (E, R, S) effecting information processing.